# EUROPEAN PATENT APPLICATION

(11) **EP 2 009 716 A1**
(43) Date of publication of application: **31.12.2008**
(21) Application number: 07707652.9
(22) Date of filing: 29.01.2007
(51) Int. Cl.: H01M 2/02, H01G 9/016, H01G 9/10, H01M 2/30

(54) **CONTAINER FOR ELECTRICITY ACCUMULATOR AND BATTERY AND ELECTRIC DOUBLE LAYER CAPACITOR EMPLOYING SAME**

(30) Priority: 30.01.2006 JP 2006020454
(71) Applicant: Kyocera Corporation, Kyoto-shi, Kyoto-fu 612-8501 (JP)
(72) Inventor: USHIO, Yoshihiro, Higashiomi-shi Shiga 529-1595 (JP); MIYAISHI, Manabu, Higashiomi-shi Shiga 529-1595 (JP); YOKOI, Kiyotaka, Higashiomi-shi Shiga 529-1595 (JP); TANAKA, Nobuyuki, Higashiomi-shi Shiga 529-1595 (JP)
(74) Representative: Beetz & Partner
(86) International application number: PCT/JP2007/051421
(87) International publication number: WO 2007/086569

(57) **Abstract**

The invention relates to a container for electric energy storage device excellent in the manufacturing efficiency and easy for surface mounting to an external electric circuit board, and a battery and electric double layer capacitor at high performance using the same. A container for electric energy storage device includes a frame (1), a first sealing member (2) bonded to the frame (1) so as to close a first opening of the frame (1), and a second sealing member bonded to the frame (1) so as to close a second opening of the frame (1) and having a connection end portion disposed side by side with the first sealing member (2). The container for electric energy storage device can be manufactured through a simple manufacturing process and can be surface-mounted easily.

## Description

### Technical Field

The present invention relates to a container for electric energy storage device for use in a chargeable battery or electric double layer capacitor, and a battery or electric double layer capacitor using the same. More specifically, the present invention relates to a thin battery used for small-sized electronic equipment such as cellular phones, a battery for an electric double layer capacitor for use in a backup power source of semiconductor memories, and stand-by power sources for electronic equipments, or an electric double layer capacitor and a container for electric energy storage device.

### Background Art

In recent years, along with remarkable development of portable equipment typically represented by cellular phones, portable computers, and camera-integrated video tape recorders, further decrease in the size and weight have been demanded. Then, also for the battery as the power source for such portable equipments, it has been demanded to increase the energy density and decrease the size and the weight of the battery.

Further, an electric double layer capacitor uses an electric double layer in which positive and negative charges are opposed and arranged at an extremely small distance at the boundary where different two phases (for example, solid electrode and electrolyte) are in contact with each other. The electric double layer capacitor is an electric device capable of charging and discharging electric energy by utilizing electrostatic adsorption and desorption of ions in the electric double layer.

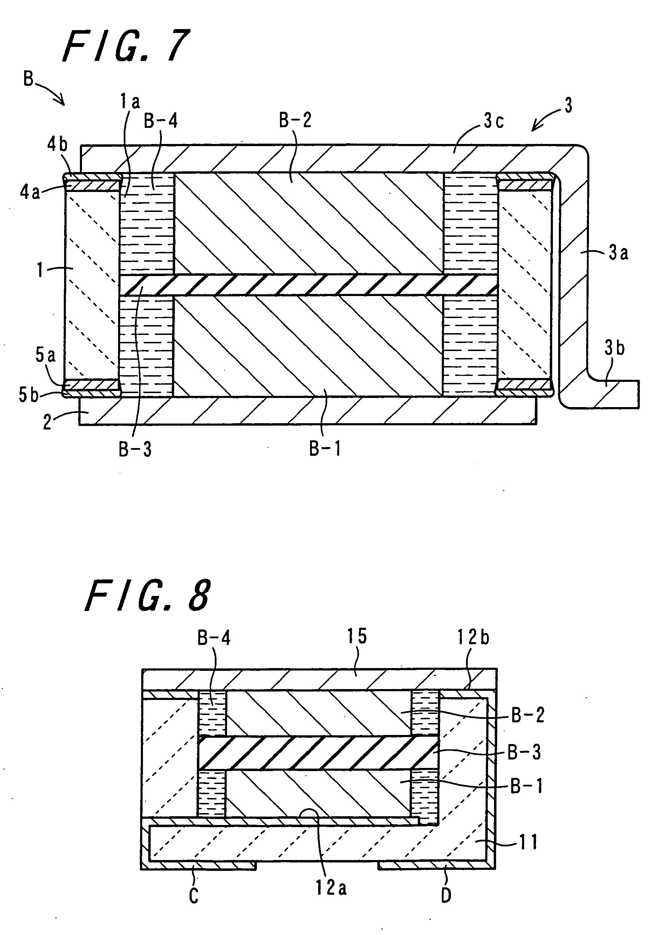

Then, a thin secondary battery or electric double layer capacitor in which electric energy storing elements including a positive electrode (first polarizable electrode) B-1, a negative electrode (or second polarizable electrode) B-2, and a separator B-3 (that is, battery elements or electric double layer capacitor elements) and an electrolyte B-4 are contained in a substrate 11 made of ceramics has been proposed in recent years as shown in Fig. 8.

Charge and discharge in the battery and the electric double layer capacitor can be conducted by way of the first and the second electrodes C, D formed on the lower surface of the ceramic substrate 11 and the battery or the double layer capacitor can be connected by means of solder or the like on an external electric circuit board (refer, for example, to Japanese Unexamined Patent Publication JP-A 2004-227959 (pages 4 to 6, Fig. 1)).

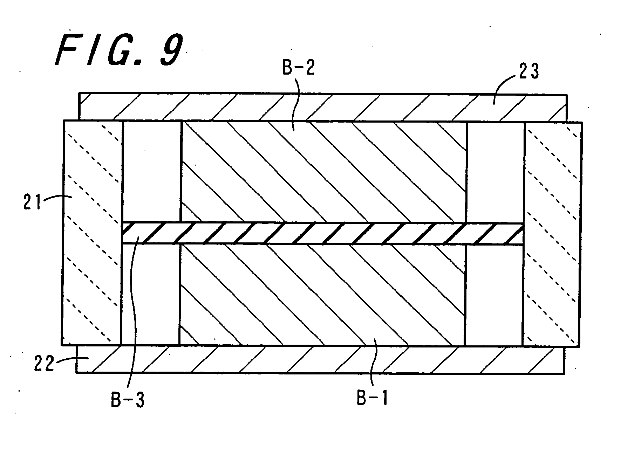

Further, a thin solid electrolyte battery in which battery elements including a positive electrode B-1, a negative electrode B-2, and a solid electrolyte B-3 are contained in a container having a frame 21 made of ceramics, a metal bottom plate 22 and a lid member 23 as shown in Fig. 9 has been known.

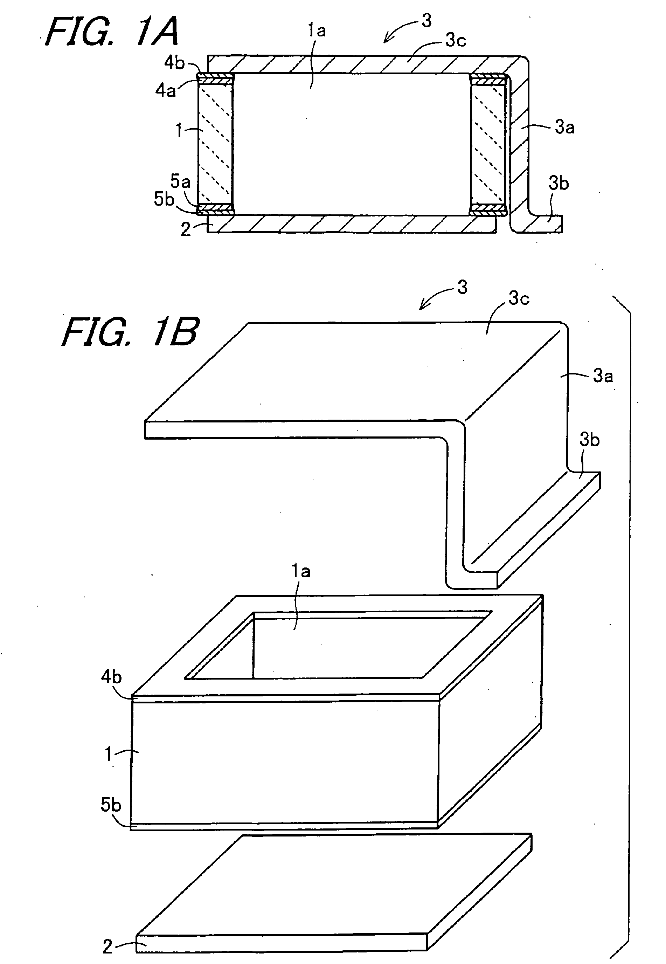

As shown in Fig. 9, the existent solid electrolyte battery is formed as a sealed type structure in which the solid electrolyte B-3 is disposed in a state being sandwiched by the positive electrode B-1 and the negative electrode B-2 between the bottom plate 22 and the lid member 23 in the container in which a concave container is formed with a frame 21 bonded to the outer periphery at the upper surface of the bottom plate 22 made of a metal such as an iron(Fe)-nickel(Ni)-cobalt(Co) alloy and the lid member 23 made of a metal such as Fe-Ni-Co alloy is bonded to the upper surface of the frame 21. Then, charge and discharge are conducted at the bottom plate 22 and the lid member 23 (refer, for example, to Japanese Unexamined Patent Publication JP-A 57-80656 (1982) (pages 2 and 3, Fig. 1).

However, in the battery or the electric double layer capacitor using the container for electric energy storage device shown in Fig. 8, a conductor layer has to be disposed being passed through the ceramic substrate 11 for connecting the first metallized layer 12a with the first electrode C. By such a complicate structure, it involves a problem of requiring a number of steps for manufacturing the ceramic substrate 11 and low manufacturing efficiency. Further, it also involves a problem that a manufacturing cost is high, and decrease in the cost is limited as well.

Further, the solid electrolyte battery using the container for electric energy storage device shown in Fig. 9 involves a problem that it cannot be surface mounted as it is to an external electric circuit board since charge and discharge are conducted at the bottom plate 22 and the lid member 23 bonded to the lower surface and the upper surface of the ceramic frame 21. That is, it is necessary to connect the bottom plate 22 to one of electrodes of the external electric circuit board and then connect the lid member 23 and the other electrode of the external electric circuit board by way of lead wires or the like. As described above, it involves a problem that the surface mounting to the external electric circuit board is complicated and the operation efficiency of surface mounting is extremely low.

### Disclosure of Invention

Accordingly, the invention has been achieved in view of the foregoing problems and its object is to provide a container for electric energy storage device excellent in the manufacturing efficiency and easy for surface mounting to an external electric circuit board, as well as a battery and electric double layer capacitor at high performance using the same.

According to one of the invention, a container for electric energy storage device which contains electric energy storage elements comprises: a frame; a first sealing member bonded to the frame so as to close a first opening of the frame; and a second sealing member bonded to the frame so as to close a second opening of the frame and having a connection end portion disposed in a vicinity of the first sealing member.

Further, according to one of the invention, it is preferable that the second sealing member essentially consists of one plate member.

Further, according to one of the invention, it is preferable that the connection end portion is flush with the first sealing member.

Further, according to one of the invention, it is preferable that the connection end portion is outside of an outer lateral surface of the frame and in parallel with the first sealing member.

Further, according to one of the invention, it is preferable that the connection end portion in parallel with the first sealing member is disposed in a region which is on a periphery of the first opening and is inward the outer lateral surface of the frame.

Further, according to one of the invention, it is preferable that the connection end portion is bonded to the periphery of the first opening.

Further, according to one of the invention, it is preferable that the connection end portion is disposed at plural positions in symmetrical with respect to the center of the frame in a plan view.

Further, according to one of the invention, it is preferable that the frame essentially consists of alumina sintered body.

Further, in the invention, it is preferable that at least one of the first sealing member and the second sealing member is bonded by way of a frame-like member to the frame.

Further, according to one of the invention, it is preferable that at least one of the first sealing member and the second sealing member is bonded by way of metal containing aluminum as a main ingredient to the frame or the frame-like member.

Further, according to one of the invention, it is preferable that the bonding portion of the second sealing member has a narrower width region than other region of the bonding portion.

Further, according to one of the invention, it is preferable that the bonding portion of the second sealing member has a narrower width region on the side of the region where the connection end portion is disposed than other region of the bonding portion.

Further, according to one of the invention, it is preferable that an insulating material in at least one of the first sealing member and the second sealing member comprises an insulating material and a conductor film on an a surface of the insulating material.

Further, according to one of the invention, it is preferable that an insulating coat layer is coated on a first surface of the first sealing member opposite to a second surface of the first sealing member bonded to the frame.

According to one of the invention, a battery comprises: the container for electric energy storage device constituted as described above; a positive electrode and a negative electrode in the container for electric energy storage device, a separator interposed between the electrodes; and an electrolyte.

According to one of the invention, an electric double layer capacitor comprises: the container for electric energy storage device constituted as described above; two polarizable electrodes in the container for electric energy storage device, a separator interposed between the two polarizable electrodes; and an electrolyte.

In accordance with one of the invention, the container for electric energy storage device is a container for electric energy storage device containing electric energy storage elements and since it includes the frame, the first sealing member bonded to the frame so as to close the first opening of the frame, and the second sealing member bonded to the frame so as to close the second opening of the frame and having the connection end portion disposed in a vicinity of the first sealing member, the container for electric energy storage device can be placed on a surface of the external electric circuit board with the first sealing member being on the side of the external electric circuit board, and the first sealing member and the connection end portion of the second sealing member can be connected by a surface mounting method to the electrodes of the external electric circuit board upon mounting with no addition of connection means such as a connection lead for external connection thereby thereby capable of improving the operation efficiency for mounting.

In accordance with one of the invention, since the second sealing member essentially consists of a sheet of plate material, the second sealing member can be manufactured, for example, by integrally punching out the second sealing member from a plate material and bending the same. Accordingly, a container for electric energy storage device with decreased number of manufacturing steps and excellent in the manufacturing efficiency can be provided.

In accordance with one of the invention, since the connection end portion is flush with the first sealing member, it can be easily surface mounted to the surface of a flat external electric circuit board.

In accordance with one of the invention, since the connection end portion is outside of an outer lateral surface of the frame and in parallel with the first sealing member, the area of connection between the connection end portion and the external electric circuit board is increased thereby enabling surface mounting at a higher bonding strength.

In accordance with one of the invention, since the connection end portion in parallel with the first sealing member is disposed in a region which is on a periphery of the first opening and is inward the outer lateral surface of the frame, the surface mounting area on the external electric circuit board can be decreased.

In accordance with one of the invention, since the connection end portion is bonded to the periphery of the first opening, the connection end portion is fixed to make the positional relation with the first sealing member constant and, accordingly, positioning with the electrode on the external electric circuit board can be facilitated to make the electric connection reliable.

In accordance with one of the invention, since the connection end portion is disposed to plural positions in symmetrical with respect to the center of the frame in a plan view, this can simplify the operation of judging the direction of attaching the battery or the like upon mounting the battery or the like using the container for electric energy storage device to the external electric circuit board.

In accordance with one of the invention, since the frame essentially consists of alumina sintered body, it is less corrosive to an electrolyte or the like injected to the inside to stabilize the performance of the battery or the electric double layer capacitor.

In accordance with one of the invention, since at least one of the first sealing member and the second sealing member is bonded by way of a frame-like member to the frame, the first sealing member or the second sealing member can be bonded easily to the frame.

In accordance with one of the invention, since at least one of the first sealing member and the second sealing member is bonded to the frame or the frame-like member by way of a metal containing aluminum as a main ingredient, aluminum is less corrosive to an electrolyte or the like contained in the battery or the electric double layer capacitor to stabilize the performance of the battery or the electric double layer capacitor.

In accordance with one of the invention, since the bonding portion of the second sealing member has a narrower width region than other region of the bonding portion, a path for releasing the pressure is restricted to a portion of narrow bonding width when the internal pressure of the battery and the electric double layer capacitor increases.

In accordance with one of the invention, since the bonding portion of the second sealing member has a narrower width region on the side of the region where the connection and portion is disposed than other region of the bonding portion , the path for releasing the pressure can be restricted to the side of the connection end portion. insulating material in at least one of the first sealing member and the second sealing member comprises an insulating material and a conductor film on a surface of the insulating material, various insulating materials such as a resin can be used for the first sealing member and the second sealing member.

In accordance with one of a first invention, since an insulating coat layer is coated on a first surface of the first sealing member opposite to a second surface of the first sealing member bonded to the frame, the area of bonding between the first sealing member and the external electric circuit board can be decreased.

In accordance with one of the invention, since the battery comprises the container for electric energy storage device of the constitution described above, a positive electrode and a negative electrode in the container for electric energy storage device, a separator intervened between the electrodes, and an electrolyte, a battery of easy surface mounting can be provided.

In accordance with one of the invention, since an electric double layer capacitor comprises the container for electric energy storage device of the constitution described above, the two polarizable electrodes in the container for electric energy storage device, a separator interposed between the two polarizable electrodes, and an electrolyte, an electric double layer capacitor of easy surface mounting can be provided.

### Brief Description of Drawings

Other and further objects, features, and advantages of the invention will be more explicit from the following detailed description taken with reference to the drawings.

Fig. 1A is a cross sectional view showing a container for electric energy storage device according to a first embodiment of the invention.

Fig. 1B is an assembling perspective view of a container for electric energy storage device in Fig. 1A.

Fig. 2A is a cross sectional view showing a container for electric energy storage device according to a second embodiment of the invention.

Fig. 2B is a cross sectional view showing a container for electric energy storage device according to a third embodiment of the invention.

Fig. 3 is a perspective assembling view showing a container for electric energy storage device according to a fourth embodiment of the invention.

Fig. 4A is a cross sectional view showing a container for electric energy storage device according to a fifth embodiment of the invention.

Fig. 4B is a cross sectional view showing a container for electric energy storage device according to a sixth embodiment of the invention.

Fig. 5 is a perspective assembling view showing a container for electric energy storage device according to a seventh embodiment of the invention.

Fig. 6A is a plan view showing a container for electric energy storage device according to an eighth embodiment of the invention.

Fig. 6B is a plan view showing a container for electric energy storage device according to a ninth embodiment of the invention.

Fig. 7 is a cross sectional view showing a battery or an electric double layer capacitor according to a tenth embodiment of the invention.

Fig. 8 is a cross sectional view showing one example of a conventional battery and electric double layer capacitor.

Fig. 9 is a cross sectional view showing an example of the conventional battery.

### Best Mode for Carrying out the Invention

Now referring to the drawings, preferred embodiments of the invention are described below.

A container for electric energy storage device, as well as a battery or an electric double layer capacitor using the same according to the invention are to be described specifically.

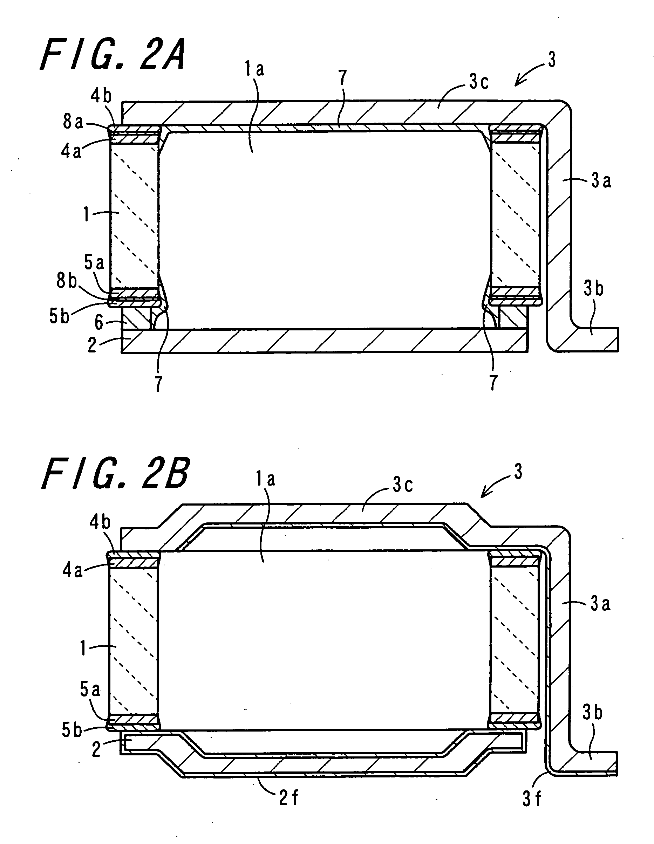

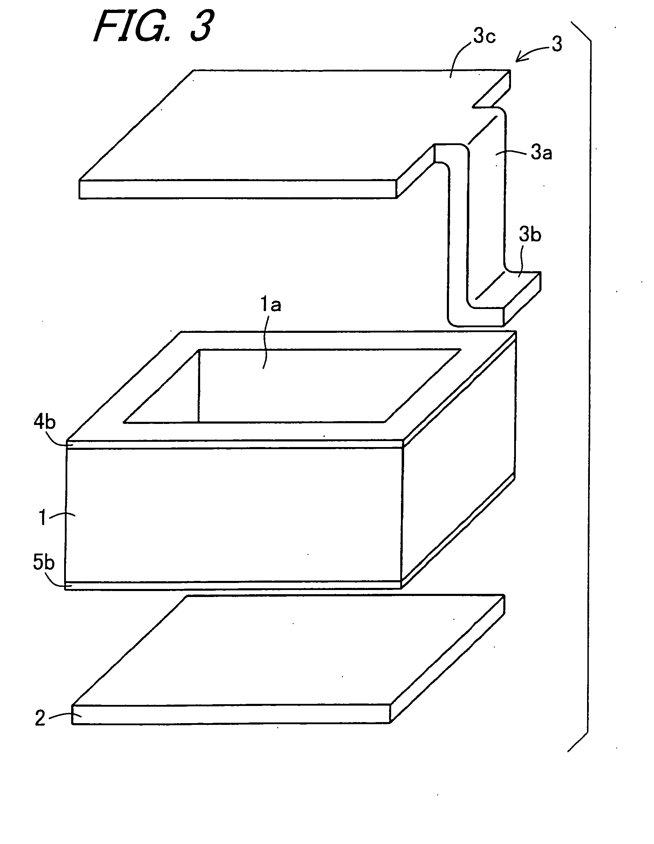

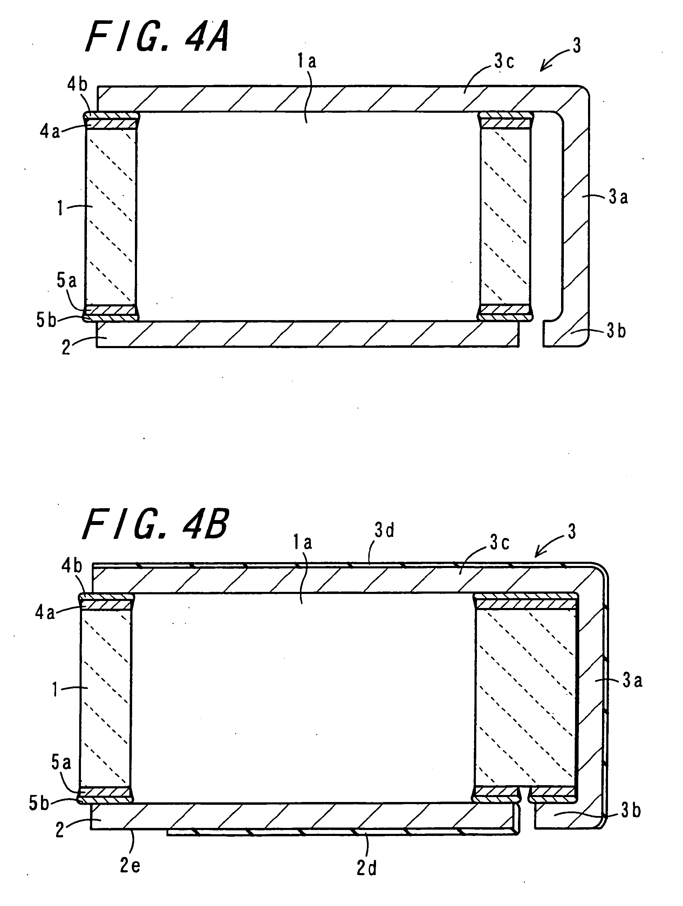

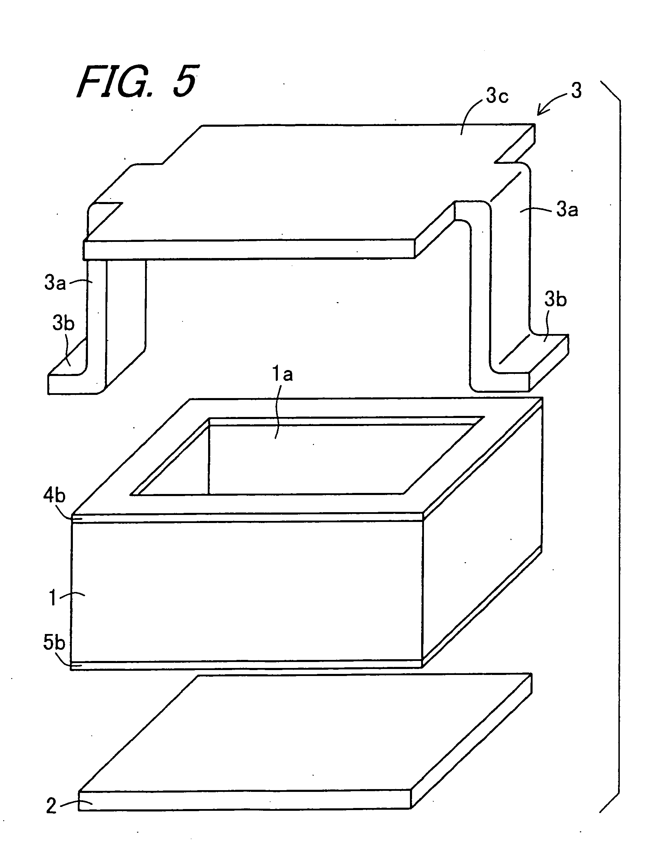

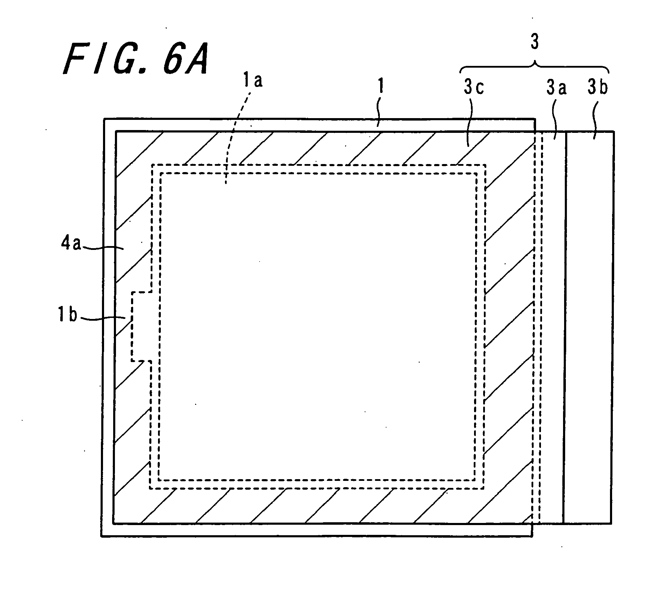

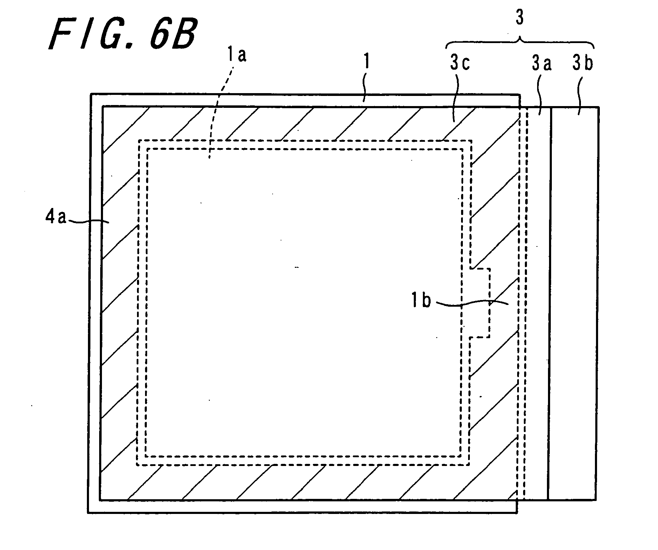

In Fig. 1A and Fig. 1B, Fig. 1A is a cross sectional view showing a container for electric energy storage device according to a first embodiment of the invention and Fig. 1B is an assembling perspective view of a container for electric energy storage device in Fig. 1A. Further, Fig. 2A is a cross sectional view showing a container for electric energy storage device according to a second embodiment of the invention. Fig. 2B is a cross sectional view showing a container for electric energy storage device according to a third embodiment of the invention. Fig. 3 is a perspective assembling view showing a container for electric energy storage device according to a fourth embodiment of the invention. Fig. 4A is a cross sectional view showing a container for electric energy storage device according to a fifth embodiment of the invention. Fig. 4B is a cross sectional view is a cross sectional view showing a container for electric energy storage device according to a sixth embodiment of the invention. Fig. 5 is a perspective assembling view showing a container for electric energy storage device according to a seventh embodiment of the invention. Fig. 6A is a plan view showing a container for electric energy storage device according to an eighth embodiment of the invention. Fig. 6B is a plan view showing a container for electric energy storage device according to a ninth embodiment of the invention.

In the drawings, reference numeral 1 denotes a frame made of an insulating material, reference numeral 1a denotes an inner space of the frame 1 in which battery elements or electric double layer capacitor elements (that is, electric energy storage elements) are contained, reference numeral 2 denotes a first sealing member (hereinafter also referred to as a bottom plate), reference numeral 3 denotes a second sealing member (hereinafter also referred to as a lid member), reference numeral 3a represents an extended portion of the second sealing member 3, reference numeral 3b denotes a connection end portion connected by way of the extended portion 3a to a main body 3c of the second sealing member 3, reference numeral 4a denotes a second conductor layer formed on the upper surface of the frame, and reference numeral 5a denotes a first conductor layer formed at the lower surface of the frame 1.

The container for electric energy storage device of the invention includes the frame 1 having openings at both upper and lower ends, a first sealing member (bottom plate) 2 jointed to the frame 1 so as to close the first opening of the frame 1 (lower end opening in the drawing), and a second sealing member (lid member) 3 having the connection end portion 3b bonded to the frame 1 so as to close the second opening of the frame 1 (upper end opening in the drawing) and having the connection end portion 3b disposed at a position near the first sealing member 2 in parallel therewith. Then, the extended portion 3b extended so as to be led from the main body 3c of the second sealing member 3, electrically connects the main body 3c of the second sealing member 3 and the connection end portion 3b.

That is, a container for electric energy storage device includes the bottom plate 2 having a conductive portion, the frame 1 jointed over the entire periphery at the outer periphery of the upper surface of the bottom plate 2, and the lid member 3 having the conductive portion bonded to the periphery of the second opening at the upper surface of the frame 1 so as to close the inner space 1a, and electric energy storage elements such as the battery elements or electric double layer capacitor elements are contained in the inner space 1a. In the container for electric energy storage device, the lid member 3 includes the main body portion 3c for closing the second opening, the extended end portion 3a, and the connection end portion 3b of the frame 1. The extended portion 3a is extended from the upper end of the frame 1 along the outer lateral surface of the frame 1 as far as the lower end of the frame 1 and connected at one end to the main portion 3c of the lid member 3 and connected at the other end to the connection end portion 3b.

Figs. 1A and 1B, Figs. 2A and 2B, Fig. 3, Figs. 4A and 4B, and Fig. 5 are views in which the frames 1 are formed of ceramic insulating materials as the examples. In this case, the second conductor layer 4a is formed on the entire periphery of the second opening on the upper surface of the frame 1 so as to form the second bonding portion over the entire periphery. Further, the first conductor layer 5a is also formed on the periphery of the first opening at the lower surface of the frame 1 so as to form the first bonding portion over the entire periphery. Then, the bottom plate 2 is bonded by way of the first conductor layer 5a to the frame 1, and the lid member 3 is bonded by way of the second conductor layer 4a to the frame 1.

Further, Figs. 1A and 1B, Figs. 2A and 2B, Fig. 3, Figs. 4A and 4B, and Fig. 5 show an example in which one end of the extended portion 3a is connected to the main body portion 3c of the lid member 3, and the extended portion 3a is extended from the upper end of the frame 1 along the outer lateral surface of the frame 1 as far as the lower end of the frame 1, with the other end being as the connection end portion 3b. The connection end portion 3b means a portion that functions as a connection terminal upon connection of the lid member 3 to an external electric circuit board. Further, they shows examples, in a case where the extended portion 3a is formed integrally with the main body portion 3c of the lid member 3 and extended so as to be led out of a portion of the lateral surface between the upper surface and the lower surface of the main body portion 3c. In this case, the lid member 3 is formed of a sheet of plate member and can be manufactured by integrally punching out the main body portion 3c, the extended portion 3a and the connection end portion 3b from the plate material and bending the extended portion 3a to the main body portion 3c. Further, they show examples where the connection end portion 3b is disposed so as to be flush with the bottom plate 2. Although not illustrated, it may be of course in a configuration where the extended portion 3a is extended from the bottom plate 2 and the connection end portion 3b of the extended portion 3a is disposed so as to be flush with the main body portion 3c of the lid member 3 (configuration formed by overturning that shown in Fig. 1).

As described above, in the container for electric energy storage device of the invention, the bottom plate 2 and the lid member 3 are bonded face to face with each other so as to sandwich the frame 1 therebetween and close the openings of both of the upper and lower ends of the frame 1, the electric energy storage elements are sealed in the inner space 1a surrounded by the frame 1, the bottom plate 2 and the lid member 3, the connected end portion 3b connected with the main body portion 3c of the lid member 3 is disposed along with the bottom plate 2, and formed such that the bottom plate 2 and the connection end portion 3b can be connected to the electrode of the external electric circuit board.

Further, it may also be in a configuration that the extended portion 3a is manufactured separately from the main body portion 3c of the lid member 3 and bonded to the main body portion 3c of the lid member 3. Further, it is not always necessary that the lower surface of the connection end portion 3b and the lower surface of the bottom plate 2 are just flush with each other and it may suffice that troubles are not caused upon connection with wiring conductors on the external electric circuit board by means of solder bonding.

Further, Fig. 7 is a cross sectional view showing a battery B or an electric double layer capacitor B according to a tenth embodiment of the invention using the container for electric energy storage device of the invention. In Fig. 7, are shown a positive electrode or polarizable electrode (first polarizable electrode) B-1, a negative electrode or polarizable electrode (second polarizable electrode) B-2, a separator B-3 interposed between the positive electrode (or first polarizable electrode) B-1 and the negative electrode (or second polarizable electrode) B-2, and an electrolyte B-4. The electric energy storage elements comprising the positive electrode (or first polarizable electrode) B-1, the negative electrode (or second polarizable electrode) B-2, the separator B-3, and the electrolyte B-4 are contained in the inner space 1a of the frame 1 thereby constituting the battery B or the electric double layer capacitor B of the invention. In Fig. 7, other portions in common with those in Figs. 1A and 1B, Figs. 2A and 2B, Fig. 3, Figs. 4A and 4B, and Fig. 5 will be denoted by identical reference numerals.

In the container for electric energy storage device, and the battery or the electric double layer capacitor using the same of the invention, the frame 1 is made of an insulating material such as resin, glass or ceramics, and has a rectangular cylindrical, circular cylindrical or polygonal cylindrical shape. For the convenience of mounting on the external electric circuit board, the rectangular cylindrical shape facilitates design or the arrangement on the substrate. For example, the frame 1 is formed as a rectangular cylindrical shape with a length for one side of about 3 mm to 5 mm, a height of about 1 to 1.5 mm and a thickness of about 0.4 mm and having openings on both of upper and lower end faces. Among them, ceramics are suitable as the insulating material for the container for electric energy storage device in view of good sealing property, chemical stability, as well and easy fabrication. Accordingly, while description is to be made on an example where the frame 1 is made of ceramics, the container for electric energy storage device can also be formed also in a case of using other insulating materials. For example, in a case of the resin, a liquid crystal polymer, modified polyamide, nylon resin, polypropylene, etc. can be used. Further, the frame 1 may be formed in any structure so long as it can electrically insulate the bottom plate 2 and the lid member 3 and may be formed, for example, by coating the surface of a metal with an insulating material, or sandwiching an insulating material between frame-shape metal members to insulate upper and lower portions.

For the frame 1, various kinds of ceramics, for example, alumina (aluminum oxide, Al₂O₃) sintered body, or aluminum nitride (AlN) sintered body or glass ceramics can be used. In a case that the frame 1 is made of the AlN sintered body, heat during operation can be dissipated efficiently to the outside. In a case of using alumina (aluminum oxide, Al₂O₃) sintered body, it is excellent in the mechanical strength and excellent in the electric insulation.

In a case where the frame 1 is made of alumina (aluminum oxide Al₂O₃) sintered body, the frame 1 is manufactured as described below. That is, an appropriate organic binder, etc. are mixed to a starting powder such as Al₂O₃, silicon oxide (SiO₂), magnesium oxide (MgO), and calcium oxide (CaO) to form a granular powder. The powder is charged in a mold, applied with press molding to manufacture a molded product of a cylindrical frame 1 such as of a rectangular cylindrical, circular cylindrical or polygonal cylindrical shape. The molded product is fired at 1500°C to 1600°C, to manufacture the frame 1.

A metal paste containing, as a main ingredient, a powder of metal such as molybdenum (Mo) and manganese (Mn) is printed and coated on the periphery at the openings for both upper and lower ends on the upper surface and the lower surface, and other required portions of the frame 1 to form a metal paste layer as the second conductor layer 4a and the first conductor layer 5a, and they are fired at a temperature of about 1300°C to 1500°C. Thus, the first conductor layer 5a and the second conductor layer 4a are formed on the upper surface and the lower surface of the frame 1.

When bonding the lid member 3 to the second conductor layer 4a and the bottom plate 2 to the first conductor layer 5a by brazing materials 4b and 5b, respectively, an Ni layer is preferably applied by a plating method to the second conductor layer 4a and the first conductor layer 5a. This can improve the wettability of the brazing materials 4b and 5b to the first conductor layer 5a and the second conductor layer 4a, to strengthen the bonding of the first conductor layer 5a and the second conductor layer 4a to the lid member 3 and the bottom plate 2.

Then, the bottom plate 2 is bonded to the first conductor layer 5a by the brazing material 5b. Further, after inserting the battery elements or the electric double layer capacitor elements into the inner space 1a of the container comprising the frame 1 and the bottom plate 2, the lid member 3 is bonded to the second conductor layer 4a by the brazing material 4b having a melting point lower by 30°C or more than that of the brazing material 5b. As described above, the container for electric energy storage device of the invention is constituted by the frame 1, the bottom plate 2, and the lid member 3.

The bottom plate 2 and the lid member 3 are electroconductive for at least a portion thereof, that is, a portion in contact with the electric energy storage elements, a terminal portion connected to the external electric circuit board, and a portion for connecting the portion in contact with the electric energy storage elements and the terminal portion. Preferably, the portions are each made of a metal plate such as of stainless steel (SUS), Fe-Ni-Co alloy, or aluminum (Al) and are bonded to the frame 1 where Ni plating is applied to the surface of the second conductor layer 4a and the first conductor layer 5a by brazing materials 4a and 5b such as silver (Ag) brazing material, Ag-copper (Cu) brazing material, or Al brazing material. Al brazing material is used preferably for the brazing materials 4b and 5b for the lid member 3 and the bottom plate 2, particularly, for one to be used as the positive electrode. That is, in a case where the lid member 3 is used as the positive electrode, it is preferred that Ni plating is applied to the surface of the second conductor layer 4a, then the frame 1 and the lid member 3 are bonded by way of the Al brazing material 4b under a vacuum atmosphere or a reducing atmosphere by using Al brazing material as the brazing material 4b. Since Al brazing material is less corrosive to the electrolyte B-4, it can protect the second conductor layer 4a or the first conductor layer 5a and can suppress them from easily leaching into the electrolyte B-4 at a charge/discharge voltage to deteriorate the bonding strength.

Further, while the reliability of bonding is improved by bonding the bottom plate 2 and the lid member 3 by the brazing materials 4b and 5b to the frame 1, the bonding method is not restrictive. For example, they may be bonded by a resin adhesive, glass sealing material, etc. In a case of this bonding method, it is not necessary to form the second conductor layer 4a and the first conductor layer 5a to the frame 1 made of ceramics.

In the container for electric energy storage device comprising the frame 1, the bottom plate 2 and the lid member 3 manufactured as described above, plating layers 8a and 8b made of a metal excellent in the corrosion resistance and excellent in the wettability with the brazing material, specifically, an Ni layer of 1 to 12 µm thickness and a gold (Au) layer of 0.05 to 5 µm thickness are preferably deposited successively by a plating method or the like to the exposed portion of the second conductor layer 4a and the first conductor layer 5a of the frame 1, the exposed portion of the bottom plate 2 and the lid member 3, and the brazing bonded portion of the first conductor layer 5a and the bottom plate 2 (refer to Fig. 2A). This can suppress, particularly, the metal portion exposed to the inner space 1a of the container for electric energy storage device from leaching easily at a charge/discharge voltage.

Further, in the bottom plate 2 and the lid member 3 exposed to the outside of the container for electric energy storage device, wettability with the solder is improved, bonding strength with the wiring conductor on the external electric circuit board is made more strong, thereby capable of preventing oxidative corrosion such as occurrence of rust. Further, the electric resistance value between the bottom plate 2 and the lid member 3 is decreased by the Au layer and the loss of the electric current generated from the battery or the electric double layer capacitor by the electric resistance can be prevented as much as possible.

In a case where the thickness of the Ni layer is less than 1 µm, it is difficult to prevent oxidative corrosion for each of the conductor layers or effectively suppress leaching of the metal ingredient from each of the conductor layers, and the performance of the battery or the electric double layer capacitor tends to be degraded. Further in a case where the thickness of the Ni layer exceeds 12 µm, it takes much time for forming plating and the mass productivity tends to be lowered.

Further, in a case where the thickness of the Au layer is less than 0.05 µm, it is difficult to form an Au layer of a uniform thickness tending to form a portion where the Au layer is extremely thin or a portion where the Au layer is not formed and tending to lower the effect of preventing the oxidative corrosion or the wettability with the solder. Further, in a case where the thickness of the Au layer exceeds 5 µm, it takes much time for forming plating and mass productivity tends to be lowered.

Preferably, after depositing to form the Ni layer and the Au layer, a corrosion resistant metal layer 7 made of a metal material not corrosive to the electrolyte B-4 is coated over the Au layer on the side of the inner space 1a of the container for electric energy storage device of the bottom plate 2 and the lid member 3 as shown in Fig. 2A. The corrosion resistant metal layer 7 is made of at least one metal selected from the group consisting of Al, zinc (Zn), an alloy containing the metal as a main ingredient, SUS, and titanium (Ti). More preferably, by coating the corrosion resistant metal layer 7 as far as the brazed portion with the frame 1, a battery B and an electric double layer capacitor B less corrosive to the electrolyte B-4 can be manufactured. The corrosion resistant metal layer 7 may be also constituted by a multi-layered metal layer comprising corrosion resistant metal layers 7 in combination.

Since Al, Zn, an alloy containing the metal as the main ingredient, Au, and SUS less leach to the organic solvent type electrolyte B-4, they are suitable particularly as the corrosion resistant metal layer 7 on the side of the positive electrode of the battery B or the electric double layer capacitor B.

Further, a metal containing Al as the main ingredient and containing 0.5 to 10% by weight of silicon (Si) is used preferably. By the use of the Al-Si alloy containing Al as the main ingredient, the bonding strength between the corrosion resistant metal layer 7, and the positive electrode B-1, and the negative electrode B-2 or the polarizable electrodes B-1 and B-2 by way of a conductive material such as a fluororesin containing carbon particles is increased, and the positive electrode B-1 and the negative electrode B-2, or the polarizable electrode B-1, B-2 can be bonded firmly to the bottom plate 2 and the lid member 3, as well as the electric connection can be improved.

The corrosion resistant metal layer 7 is formed, for example, by masking a wall of the frame 1 facing the inner space 1a by magnetically adsorbing a masking member made of stainless steel (SUS) so as to expose a predetermined range of the inner space 1a of the container for electric energy storage device, so that the second conductor layer 4a and the first conductor layer 5a are not in electric conduction, and forming the corrosion resistant metal layer 7 to a thickness of 0.2 to 40 µm by a vacuum deposition method or a sputtering method. For example, as shown in Fig. 2A, the corrosion resistant metal layer 7 is formed on at least one of regions from the upper portion of the inner space 1a of the frame 1 to the surface of the lid member 3 and from the lower portion of the space 1a of the frame 1 to the surface of the frame like member 6. Preferably, the corrosion resistant metal layer 7 is formed on one of the bottom plate 2 or the lid member 3 on the side bonded at first to the frame 1. Fig. 2A shows an example of a case where the lid member 3 is bonded to the frame 1 prior to the bottom plate 2. This can be formed in the same manner also in other embodiments. The corrosion resistant metal layer 7 may be also constituted by a multi-layered metal layer in which at least one metals selected from Al, Zn, an alloy containing the metal as the main ingredient, Au, SUS, and Ti is deposited to the uppermost layer.

Further, upon deposition of the corrosion resistant metal layer 7, the surface of the corrosion resistant metal layer 7 can be made rough such that the arithmetic mean roughness Ra is about from 0.1 µm to 3 µm, for example, by increasing the deposition rate of vacuum vapor deposition or sputtering, or applying etching after film deposition, thereby enabling to lower the resistance in the electric connection with the electric energy storage element.

In a case where the thickness of the corrosion resistant metal layer 7 is less than 0.2 µm, this results in a portion that cannot be completely covered with a sufficient thickness by the corrosion resistant metal layer 7 and the continuous film surface of the corrosion resistant metal layer 7 cannot sometimes completely cover a region from the surface of the second conductor layer 4a or the first conductor layer 5a to the lid member 3 or the bottom plate 2 bonded by way of the brazing material 4b, 5b of Ag brazing material, Ag-Cu brazing material, Al brazing material etc, so that the second conductor layer 4a or the first conductor layer 5a may be possibly corroded by the electrolyte B-4 used for the battery B or the electric double layer capacitor B. Further, in a case where the thickness of the corrosion resistant metal layer 7 exceeds 40 µm, this results in a disadvantage of taking much time for the formation of the film surface. Further, in a case where the thickness of the corrosion resistant metal layer 7 exceeds 40 µm, this may possibly result in a disadvantage of causing a stress due to the difference of thermal expansion coefficient between the corrosion resistant metal layer 7 and the bottom plate 2 or the lid member 3 to detach the corrosion resistant metal layer 7 from the bottom plate 2 or the lid member 3.

Then, as shown in Figs. 1A and 1B, the extended portion 3a extends out of the main body portion 3c of the lid member 3, the extended portion 3a is bent along the outer lateral surface of the frame 1 to the direction of the lower end face (bonded portion with bottom plate 2), the extended portion 3a is extended as far as the lower end of the frame 1 and, bent at the other end on the side opposite to the frame 1 (outer side) into the connection end portion 3b and, more preferably, the lower surface of the connection end portion 3b is disposed so as to be flush with the lower surface of the bottom plate 2. Then, the lower surface of the connection end portion 3b and the bottom plate 2 function as an external connection terminal to be connected with the external electric circuit board and can be surface-mounted to the wiring conductor of the external electric circuit board.

The width, the position, etc. of the extended portion 3a and the connection end portion 3b can be changed in accordance with the shape and the size of the wiring conductor of the external electric circuit board. For example, the main body portion 3c of the lid member 3 and the extended portion 3a may be of an identical width as shown in Fig. 1B, or the width of the extended portion 3a may be narrower than that of the main body portion 3c of the lid member as shown in Fig. 3. By making the width of the extended portion 3a to narrower than that of the main body portion 3c of the lid member 3 as shown in Fig. 3, the connection area of the wiring conductor of the external electric circuit board connected with the connection end portion 3b of the extended portion 3a can be made smaller, and the space for mounting the battery B or the electric double layer capacitor B to the external electric circuit board can be decreased.

Further, while the extended portion 3a is disposed at a central portion on one lateral surface of the frame 1, it may be disposed also to a corner put between adjacent two lateral surfaces of the frame 1. Further, the extended portion 3a may be disposed not being restricted to one position but, for example, may be disposed at a lateral surface and the opposing lateral surface on the side opposites thereto, or may be disposed to the entire' four lateral surfaces or the entire four corners. In this case, the corners of the frame 1 may be chamfered and the extended portion 3a may be disposed to the chamfered surface at the corner when formed into an octagonal shape. As in the examples described above, in a case where the extended portions 3a are disposed at plural positions in symmetrical with respect to the center for the frame 1 in plan view, the mounting direction of the battery B or the electric double layer capacitor B can be aligned easily in the direction of the electrode of the external electric circuit board upon mounting the battery B or the electric double layer capacitor B, and they can be connected easily while conforming to the polarity of the wiring conductors of the external electric circuit board, so that mounting is facilitated further.

In Figs. 1A and 1B, Figs. 2A and 2B, Fig 3 and Fig. 5, while a gap is present between the extended portion 3a and the outer lateral surface of the frame 1, a metallized conductor layer may be formed also to the outer lateral surface of the frame 1, and the extended portion 3a may be brazed to the outer lateral surface of the frame 1 by way of the matallized conductor layer. In this case, since the extended portion 3a can be fixed to the frame 1, a position of the connection end portion 3b does not fluctuate and can be mounted easily to the wiring conductor on the external electric circuit board. For this purpose, it is preferred to fix at least the lower end of the extended portion 3a by means of brazing or the like to the outer lateral surface of the frame 1. In this case, the first conductor layer 5a and the brazing material 5b for bonding the bottom plate 2 to be disposed at the periphery of the connection end portion 3b of the extended portion 3a are formed so as to keep a sufficient insulation distance.

Further, in the embodiment shown in Fig. 3, a groove may also be formed in the vertical direction on the outer peripheral lateral surface of the frame 1 such that the extended portion 3a of the narrow width is contained in the groove formed on the outer peripheral lateral surface of the frame 1.

Further, in Figs. 1A and 1B, Figs. 2A and 2B, Fig. 3, and Fig. 5, while the connection end portion 3b of the extended portion 3a is bent at the lower end of the frame 1 to the side opposite to the frame 1 (outer side), it is not always necessary to bend the connection end portion 3b outward but it may also be connected at the end face cut at the lower end of the frame 1 to the external electric circuit board. Further, as shown in Figs. 4A and 4B, the connection end portion 3b may be bent conversely to the inner side (on the side facing the frame 1). As shown in Fig. 4A, in a case of forming a space between the extended portion 3a and the outer peripheral lateral surface of the frame 1 and bending the connection end portion 3b of the extended portion 3a inward so as to surround the space, even when a force exerts in the direction of peeling the connection end portion 3b, the container for electric energy storage device is made less detachable from the external electric substrate by the resiliency of the extended portion 3a.

Further, as shown in Fig. 4B, the thickness for the lower surface portion of the frame 1 to which the connection end portion 3b is disposed is increased by so much as the length of the connection end portion 3b, the connection end portion 3b is contained to the lower surface of the frame 1 inward of the outer lateral surface of the frame 1, and preferably brazed to the lower surface of the frame 1. By bending the connection end portion 3b inward, the mounting area of the container for electric energy storage device can be decreased. Further, by brazing the connection end portion 3b to the lower surface of the frame 1, the position of the connection end portion 3b does not fluctuate to facilitate mounting to the wiring conductor on the external electric circuit board.

As described above, the bottom plate 2 and the lid member 3 function as sealing plates for sealing the openings of the frame 1, the conductive portion facing the inner space 1a serves as a collector or serves as a support member for supporting a metal film as the collector, and also has a function as a connection member for connecting with the wiring conductor on the external electric circuit board. As described above, while the bottom plate 2 and the lid member 3 are preferably made of a metal plate, they may be formed also by cutting a metal block, or can be formed also by rendering a necessary portion electroconductive. For example, as shown in Fig. 2B, they may be those in which a conductor film 3f is formed on the surface of the lid member 3 made of an insulating material, those in which a conductor film 2f is formed on the surface of the bottom plate 2 made of an insulating material, or those made of a resin in which the lid member 3 or the bottom 2 is formed of an electroconductive resin or the like.

Further, due to the structure in which one side of the lid member 3 is bonded with the external electric circuit board by way of the extended portion 3a, in a case where the inner pressure increases, for example, by excess heating of the battery B or the electric double layer capacitor B and the bonded portion between the frame 1 and the lid member 3 is detached, the sides other than the side where the extended portion 3a extends tend to be detached, by which the scattering direction of the electrolyte B-4 can be controlled. Accordingly, by mounting important parts on the side of the extended portion 3a, damages due to scattering of the electrolyte B-4 can be minimized.

Further, as shown in Fig. 6A, in a case where a narrow width portion 1b of a first conductor layer 4a is disposed, for example, on one side of a second conductor layer 4a as the bonded portion of the frame 1 to the lid member 3 opposite to the side where the extended portion 3a is connected such that the bonding width is narrowed, the bonding width with the brazing material 4b is also narrowed and the scattering direction of the electrolyte B-4 from the battery B or the electric double layer capacitor B can be directed to the direction of the opposite one side. The portion 1b narrowed for the bonding width may be disposed to other portion than the opposite one side, that is, a side adjacent with the side where the extended portion 3a is connected, a side where the extended portion 3a is connected, or at a corner between one side and a side adjacent therewith. By defining the side as the side opposite to the extended portion 3a, the scattering direction of the electrolyte B-4 can be properly controlled such that it is on the side opposite to the extended portion 3a.

Further, as shown in Fig. 6B, in a case of forming a narrow width portion 1b to the side connected with the extended portion 3a, since the extended portion 3a is disposed so as to cover the one side, the electrolyte B-4 can be stored, without scattering, between the extended portion 3a and the lateral outer surface of the frame 1.

In Figs. 6A and 6B, the second conductor layer 4a (bonded portion to the lid member 3) is hatched for easy understanding.

Further, the narrow width portion 1b may be disposed also by forming the width narrower for a portion of the frame 1.

Further, as shown in Fig. 2A, the frame-like member 6 made of a metal such as an Fe-Ni-Co alloy or Al may be brazed by way of the brazing material 5b such as an Ag brazing material, Ag-Cu brazing material or Al brazing material to the first conductor layer 5a so as to surround the lower surface of the frame 1 and the bottom plate 2 may be bonded to the frame-like member 6. In the same manner, the frame-like member 6 may also be disposed to the upper surface of the frame 1, and the lid member 3 may be bonded to the frame-like member 6. The frame-like member 6 is preferably made of Al or Al alloy.

In this case, the lid member 3 and frame-like member 6 are previously brazed to the frame 1, the battery elements or electric double layer capacitor elements are placed in a container comprising the frame 1 and the lid member 3, and the bottom plate 2 is sealed to the frame-like member 6 by a welding method such as seam welding or ultrasonic welding. As described above, by sealing the bottom plate 2 to the frame-like member 6 by the welding method such as seam welding or ultrasonic welding, the bonding operation of the bottom plate 2 can be facilitated. Since the extended portion 3a is extended from the lid member 3, it is preferred to previously bond and assemble the frame 1 and the lid member 3 and then, finally, bond and seal the bottom plate 2.

Further, it is not always necessary that the bottom plate 2 and the lid member 3 are flat plates and they may also be formed into a dish shape in which the outer peripheral portion is bent toward the frame 1, and may be bonded at the edge or the end face of the outer peripheral surface thereof to the frame 1. According to the constitution, the bent portion at the outer periphery has an effect of moderating the stress between the bottom plate 2 or the lid member 3 and the frame 1 in the same manner as in the case of providing the frame-like member 6 to provide a container for electric energy storage device suffering from less breakage such as cracks to the frame 1 by the stress. Fig. 2B shows an embodiment in which the outer peripheral surfaces of the bottom plate 2 and the lid member 3 are bonded in this way.

Further, as shown in Fig. 4B, an insulating coat 2d may be applied to a portion of the outer surface of the bottom plate 2 and an insulating coat layer 3d may be applied to a portion of the outer surface of the lid member 3. This can avoid electric short-circuit when a conductor should be in contact with the surface of the bottom plate 2 or the lid member 3 accidentally. Further, in the bottom plate 2, by applying the insulating coat 2d to a portion adjacent with the connection end portion 3b, insulation between the connection end portion 3b and the bottom plate 2 can be enhanced. Further, in a case of applying the insulating coat 2d to the bottom plate 2 such that the area for a portion 2e of the bottom plate 2 not applied with the insulating coat 2d and an area for a portion where the connection end portion 3b is solder-bonded to the external electric circuit board are substantially identical, this can prevent a phenomenon that the container for electric energy storage device is displaced positionally by the surface tension of the solder upon solder bonding.

Then, the battery B or the electric double layer capacitor B of the invention is to be described specifically. Fig. 7 is a cross sectional view showing an example of the battery B or the electric double layer capacitor B according to an embodiment of the invention, which shows an example in a case of using those shown in Figs. 1A and 1B as a container for electric energy storage device.

The battery B of the invention has the container for electric energy storage device of the constitution described above, and battery elements as electric energy storage elements contained in the inner space 1a of the container for electric energy storage device, that is, a positive electrode B-1 and a negative electrode B-2, a separator B-3 interposed between the electrodes B-1 and B-2, and the electrolyte B-4.

More specifically, the battery B of the invention is formed, as shown in Fig. 7, by placing the positive electrode B-1 on a bottom plate 2 situated to the lower surface of an inner space 1a of a frame 1 so as to be electrically connected with the bottom plate 2, placing a separator B-3 impregnated with the electrolyte B-4 on the upper surface of the positive electrode B-1 and then placing the negative electrode B-2 to the upper surface of the separator B-3, an electrolyte B-4 is injected into the inner space 1a of the frame 1, and bonding a lid member 3 with the frame 1 so as to close the opening at the upper surface of the frame 1 and to be abutted against the upper surface of the negative electrode B-2.

While Fig. 7 shows an example of disposing the positive electrode B-1 on the bottom plate 2 and disposing the negative electrode B-2 by way of the separator B-3 thereon, the negative electrode B-2 may be disposed on the bottom plate 2 and the positive electrode B-1 may be disposed by way of the separator B-3 thereon.

Further, the electric double layer capacitor B of the invention has a container for electric energy storage device of the constitution described above, and electric double layer capacitor elements as the electric energy storage elements contained in the inner space 1a of the container for the electric energy storage device, that is, two polarizable electrodes B-1 and B-2, the separators B-3 interposed between the two polarizable electrodes B-1 and B-2, and the electrolyte B-4.

The electric double layer capacitor B of the invention is formed, more specifically, as shown in Fig. 7 by placing a first polarizable electrode B-1 on the bottom plate 2 situating to the lower surface of the inner space 1a of the frame 1 so as to be electrically connected with the bottom plate 2, placing the separator B-3 impregnated with the electrolyte B-4 to the upper surface of the first polarizable electrode B-1, then placing the second polarizable electrode B-2 to the upper surface of the separator B-3, injecting the electrolyte B-4 into the inner space 1a of the frame 1, and bonding the lid member 3 with the frame 1 so as to close the opening at the upper surface of the frame 1 and to be abutted against the upper surface of the negative electrode B-2.

In the battery B or the electric double layer capacitor B shown in Fig. 7, the bottom plate 2 and the positive electrode (or first polarizable electrode) B-1, and the lid member 3 and the negative electrode (or the second polarizable electrode) B-2 may be connected electrically by way of a conductive material such as a carbon paste containing carbon particles contained in a resin (not illustrated). The conductive material is made of a carbon powder dispersed, for example, in a fluororesin and has high conductivity due to contact of the carbon powders to each other and has a resiliency. The conductive material, when it is deposited to the bottom plate 2 and the lid member 3, can provide resilient contact between the bottom plate 2 and the positive electrode (first polarizable electrode) B-1, and between the lid member 3 and the negative electrode (second polarizable electrode) B-2, respectively at a large area and reliably, to further improve the reliability of electric connection. Further, since the conductive material has high conductivity, it is free from resistive loss to electricity generated from the battery B or the electric double layer capacitor B in the deposition position of the conductive material. Further, by covering the bottom plate 2 and the lid member 3 with the conductive material, they are protected against the electrolyte B-4.

Then, a battery B or an electric double layer capacitor B having high reliability for air tight sealing and excellent in the mass productivity using the container for electric energy storage device of the invention can be obtained.

The positive electrode B-1 of the battery B is a plate-like or sheet-like electrode containing a positive electrode active substance such as LiCoO₂ or LiMn₂O₄, and a conductive substance such as acetylene black or graphite, and the negative electrode B-2 is a plate-like or sheet-like electrode containing a negative electrode active substance made of a carbon material such as cokes or carbon fibers.

The positive electrode B-1 and the negative electrode B-2 are prepared by adding the conductive material described above to the positive electrode active substance or the negative electrode active substance, further adding and mixing a binder such as polytetrafluoroethylene or polyvinylidene fluoride to form a slurry, then molding them into sheet-like shape by using a well-known doctor blade method and then cutting the sheet, for example, into a circular or polygonal shape.

Further, the separator B-3 is formed of a non-woven fabric made of polyolefin fibers or a finely porous membrane made of polyolefin and is impregnated with the electrolyte B-4 and interposed between the positive electrode B-1 and the negative electrode B-2, thereby preventing contact between the positive electrode B-1 and the negative electrode B-2 and enabling movement of the electrolyte B-4 between the positive electrode B-1 and the negative electrode B-2.

The electrolyte B-4 of the battery B is composed of a lithium salt such as lithium tetrafluoroborate, or an acid such as hydrochloric acid, sulfuric acid, or nitric acid dissolved in an organic solvent such as dimethoxyethane or propylene carbonate.

Then, the first polarizable electrode B-1 and the second polarizable electrode B-2 of the electric double layer capacitor B of the invention is an electrode obtained, for example, by carbonating phenol resin fibers (novoloid fibers) and activating them. Activation is conducted by bringing the fibers into contact with an activation gas such as a high temperature steam under a high temperature atmosphere from 800 to 1000°C. The electrode is prepared by a step of gasifying a volatile ingredient or a portion of carbon atoms in the carbide thereby developing a fine structure mainly from 1 to 10 nm to increase the inner surface area to 1 × 10⁶ m²/kg or more.

As described above, since the electric double layer capacitor B utilizes accumulation of charges to an electric double layer formed at the boundary between the two polarizable electrodes B-1 and B-2 described above, and the electrolyte B-4, extremely large electric charges corresponding to the surface area of the polarizable electrodes B-1 and B-2 can be accumulated unless the voltage exceeds a withstand voltage and the electrolyte B-4 causes electrolysis. The electric double layer capacitors are classified into two types, i.e., an organic solvent type and an aqueous solution type depending on the difference of the electrolyte B-4.

Particularly, in the electric double layer capacitor using the organic solution type can increase the driving voltage by 2 to 4 times as high as the aqueous solution type electric double layer capacitor using an aqueous solution such as an aqueous sulfuric acid solution for the electrolyte B-4. Since the storable electric energy E is represented as E = CV²/2 assuming the voltage as V and the capacitance as C, a high energy density can be obtained.

The electrolyte B-4 of the electric double layer capacitor B is composed of, for example, a lithium salt such as lithium hexafluoro phosphate (LiPF₆) or a quaternary ammonium salt such as tetraethyl ammonium tetrafluoro borate ((C₂H₅)₄NBF₄) dissolved in a solvent such as propylene carbonate (PC) or sulfolane (SLF).

Further, for the separator B-3, glass fibers or heat resistant porous resins such as polyphenylene sulfide or polyethylene terephthalate or polyamide can be used for instance.

Then, an electric double layer capacitor B in which the inner space 1a of the container for electric energy storage device is airtightly sealed can be obtained by containing the polarizable electrodes B-1 and B-2 and the separator B-3 in the inner space 1a of the container for electric energy storage device, then injecting the electrolyte B-4, for example, by using injection means such as a syringe from the upper surface of the inner space 1a of the frame 1 to which the lid member 3 is bonded and, after injection, air tightly bonding the bottom plate 2 to the opening in the inner space 1a of the frame 1.

While the electrolyte B-4 is highly corrosive and solubilizing property, since the frame 1, the bottom plate 2, and the lid member 3 has excellent corrosion resistance to the electrolyte B-4 by the use of the container for electric energy storage device of the invention, they are less corrosive to the electrolyte B-4 containing the organic solvent and the acid, so that the electrolyte B-4 is not degraded by the inclusion of impurities leaching out of the container for electric energy storage device into the electrolyte B-4 and the performance of the battery B or the electric double layer capacitor B can be maintained favorably.

The lid member 3 is made of a metal such as an Fe-Ni-Co alloy, SUS, or Al and the lid member 3 is bonded to the upper surface of the frame 1, by placing the lid member 3 to the upper surface of the frame 1 so as to cover the inner space 1a of the frame 1 and brazing them by a brazing material 4b, or by a seam welding method of rotationally moving a roller under current supply while pressing slightly along the edge of the upper surface of the lid member 3 and bonding the lid member 3 by the generated Joule heat, or by melting a previously deposited Ni layer and Al layer 4b to each of the surfaces of the lower surface of the lid member 3 and the second conductor layer 4a by ultrasonic welding, or by bonding with a resin adhesive or a glass sealing material.

Then, they are turned down with the lid member 3 being on the lower side and electric energy storage elements are placed in the inner space 1a defined by the lid member 3 and the frame 1. Finally, the battery B or the electric double layer capacitor B is manufactured by placing the bottom plate 2 made of a metal such as an Fe-Ni-Co alloy, SUS, or Al on the first conductor layer 5a at the upper surface of the frame 1 or the frame-like member 6 so as to cover the inner space 1a of the frame 1 and brazing them by a brazing material 5b, or by a seal welding method of rotationally moving a roller under current supply along the edge at the upper surface of the bottom plate 2, while pressing slightly and bonding the bottom plate 2 by the generated Joule heat, or by melting an Ni layer and an Al layer 5b deposited previously to each of the surfaces of the lower surface of the bottom plate 2 and the first conductor layer 5b, by ultrasonic welding, or bonding the bottom plate 2 to the frame 1 by a resin adhesive or a glass sealing material.

Further, in a case of making the bottom plate 2 of Al, forming the Al layer 5b on the first conductor layer 5a and adopting an ultrasonic welding method upon bonding the bottom plate 2 and the first conductor layer 5a, since the bottom plate 2 is bonded to the Al layer 5b on the first conductor layer 5a, the bonded portion between the frame 1 and the bottom plate 2 can be made less corrosive extremely to the electrolyte B-4.

That is, a passivation film of excellent corrosion resistance can be formed on the surface of the bonded portion between the bottom plate 2 and the first conductor layer 5a by the constitution described above, corrosion of the bonded portion between the bottom plate 2 and the first conductor layer 5a by the electrolyte B-4 or external atmosphere can be prevented extremely effectively to improve the reliability of airtight sealing in the inside of the battery B or the electric double layer capacitor B.

The bottom plate 2 may also be a plate-like member such as of an Fe-Ni-Co alloy or Ni-Co alloy formed at the lower surface thereof (on the side bonded with the frame 1) with an Al layer. Further, it is preferred that ridges (linearly protruded portions) are formed over the entire circumference at the outer periphery on the lower surface of the bottom plate 2. The ridges are arranged, in a case where the bottom plate 2 is a plate member made of Al, by forming ridges simultaneously upon punching the bottom plate 2 by a pressing machine or forming, for example, as a trigonal shape at a height of about 0.1 mm and downwardly protruded in the cross section by a so-called coining method after punching. The coining method is a method of restricting escape of the thickness by restraining the lateral side of a work, stacking a mold formed with unevenness to the mold surface and the work to each other, and pressing them from above and below, thereby transferring an uneven pattern on the mold to the surface of the work.

Further, in a case where the bottom plate 2 is made of a plate member of an Fe-Ni-Co alloy or the like formed at the lower surface thereof with an Al layer, an ingot of the metal is rolled, for example, into a plate member of 0.2 to 0.5 mm thickness, in which an Al plate, for example, of 0.1 mm thickness is clad-bonded to the surface thereof and, thereafter, forming ridges by the coining method described above.

Then, when the bottom plate 2 is placed with the ridges formed on the outer periphery of the bottom plate being abutted to the upper surface of the frame 1 and ultrasonic waves at about several tens of kHz are applied from the upper surface of the bottom plate 2, the ridges at the lower surface of the bottom plate 2 are bonded to the Al layer 5b at the surface on the upper surface of the frame 1 while being crushed along the unevenness of the second conductor layer 5a and the Al layer 5b at the upper surface of the frame 1. In this case, even when the upper surface of the frame 1 is warped or undulated, they are bonded due to the difference for the degree of crushing of the ridges. Then, according to the ultrasonic bonding method, the bottom plate 2 can be bonded firmly without deteriorating the airtightness in the inner space 1a of the frame 1.

The ultrasonic bonding method is, more specifically, carried out, for example, as described below. That is, the ultrasonic bonding method is carried out by setting the upper surface of the frame 1 and the bottom plate 2 as the object of bonding between a horn having a chip to a lower portion at a top end as a medium of vibrations (angled fixing base) and an anvil, and applying ultrasonic vibrations in the horizontal direction at 15 to 30 kHz while moving continuously along the outer periphery of the bottom plate 2 under application of a pressure vertically, for example, at about 30 to 50 N by way of the chip. Further, it may be a method of conducting bonding for a predetermined length in a short time by adapting the shape of the chip as a linear form and increasing the pressure in the vertical direction.

In the ultrasonic bonding method, oxide membranes or contaminants at the surface of the bonded portion are pushed out in the outward direction of the bonded portion in an initial stage of applying the ultrasonic vibrations, and Al crystal grains at the bottom plate 2 and the upper surface of the frame 1 approach to each other till the inter-atom distance to generate inter-attraction between the atoms to obtain a strong bonding. In this case, a temperature of 1/3 or lower of the melting point of the metal in the usual method of melt bonding metal is generated locally, but such an extent of heat scarcely denatures the electrolyte B-4 and, accordingly, the working life of the battery B or the electric double layer capacitor B can be increased.

Further, according to the ultrasonic bonding method, other metals are scarcely diffused in Al and, accordingly, a bonded portion having further corrosion resistance to the electrolyte B-4 can be formed.

The invention is not restricted to the examples of the embodiments described above and can be modified variously within a range not departing from the gist of the invention.

Further, in the foregoing descriptions for the preferred embodiments, terms for up and down and right and left are used merely for explaining the positional relationship on the drawings and do not mean the positional relation in actual use.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A container for electric energy storage device which contains electric energy storage elements, comprising:
a frame;
a first sealing member bonded to the frame so as to close a first opening of the frame; and
a second sealing member bonded to the frame so as to close a second opening of the frame and having a connection end portion disposed in a vicinity of the first sealing member.

2. The container for electric energy storage device of claim 1, wherein the second sealing member essentially consists of one plate member.

3. The container for electric energy storage device of claim 1 or 2, wherein the connection end portion is flush with the first sealing member.

4. The container for electric energy storage device of claim 3, wherein the connection end portion is outside of an outer lateral surface of the frame and in parallel with the first sealing member.

5. The container for electric energy storage device of claim 3, wherein the connection end portion in parallel with the first sealing member is disposed in a region which is on a periphery of the first opening and is inward the outer lateral surface of the frame.

6. The container for electric energy storage device of claim 5, wherein the connection end portion is bonded to the periphery of the first opening.

7. The container for electric energy storage device of any one of claims 1 to 6, wherein the connection end portion is disposed at plural positions in symmetrical with respect to the center of the fame in a plan view.

8. The container for electric energy storage device of any one of clams 1 to 7, wherein the frame essentially consists of alumina sintered body.

9. The container for electric energy storage device of claim 8, wherein at least one of the first sealing member and the second sealing member is bonded by way of a frame-like member to the frame.

10. The container for electric energy storage device of claim 8 or 9, wherein at least one of the first sealing member and the second sealing member is bonded by way of metal containing aluminum as a main ingredient to the frame or the frame-like member.

11. The container for electric energy storage device of any one of claims 1 to 10, wherein the bonding portion of the second sealing member has a narrower width region than other region of the bonding portion.

12. The container for electric energy storage device of claim 11, wherein the bonding portion of the second sealing member has a narrower width region on the side of the region where the connection end portion is disposed than other region of the bonding portion.

13. The container for electric energy storage device of any one of claims 1 to 12, wherein an insulating material in at least one of the first sealing member and the second sealing member comprises an insulating material and a conductor film on a surface of the insulating material.

14. The container for electric energy storage device of any one of claims 1 to 12, wherein an insulating coat layer is coated on a first surface of the first sealing member opposite to a second surface of the first sealing member bonded to the frame.

15. A battery comprising:
the container for electric energy storage device of any one of claims 1 to 14;
a positive electrode and a negative electrode in the container for electric energy storage device;
a separator interposed between the electrodes; and
an electrolyte.

16. An electric double layer capacitor comprising:
the container for electric energy storage device of any one of claims 1 to 14;
two polarizable electrodes in the container for electric energy storage device,
a separator interposed between the two polarizable electrodes, and
an electrolyte.
